# EUROPEAN PATENT APPLICATION

(11) **EP 2 147 847 A1**
(43) Date of publication of application: **27.01.2010**
(21) Application number: 09166154.6
(22) Date of filing: 22.07.2009
(51) Int. Cl.: B62D 13/02

(54) **Variable- length trailer**

(30) Priority: 22.07.2008 IT TO20080564
(71) Applicant: Industrie Cometto S.P.A., 12011 Borgo San Dalmazzo (IT)
(72) Inventor: Ghinamo, Paolo, 12012, Boves (IT)
(74) Representative: Jorio, Paolo

(57) **Abstract**

A variable-length trailer (3) comprises a front attachment portion (5), a fifth wheel (6) carried by the attachment portion (5) for coupling the attachment portion (5) to a tractor (2) in a rotatable manner about a steering axis (B), a supporting frame (7) connected to which is at least one tyred steering axle (9), an axial-adjustment device (13) set between the attachment portion (5) and the supporting frame (7) for varying the length of the trailer (3), and a hydraulic steering circuit (24) for steering the tyred steering axle (9); the hydraulic steering circuit (24) being provided with at least one variable-displacement hydraulic member (30) and a control unit (20) for varying the displacement of the variable-displacement hydraulic member (30) as a function of the rotation of the fifth wheel (6) about the steering axis (B) and of the length of the trailer (3).

## Description

The present invention relates to a variable-length trailer.

In the sector of transport with tyred vehicles there is known the use of variable-length or telescopic trailers, drawn by a tractor and comprising a front portion for attachment to the tractor and a rear frame, which are coupled to one another in an axially adjustable way to adapt the trailer to the length of the load to be transported. The front portion carries a fifth-wheel member designed to connect up to a corresponding member of the tractor, whilst the rear frame carries a plurality of tyred steering axles operated by a steering unit of their own.

Known steering units comprise at least one pair of hydraulic steering jacks associated to one of the steering axles and an adjustable mechanical transmission of the tierod/strut type. The hydraulic jacks are, in turn, actuated by a closed hydraulic circuit, which comprises a pair of hydraulic control jacks associated to the fifth-wheel member and controlled as a function of the angle of rotation of the fifth-wheel member so as to send to the hydraulic steering jacks a pre-defined flow of oil proportional to the angle of rotation itself.

Even though known steering units of the type described above are present on the majority of trailers, they prove not altogether satisfactory above all on account of the fact that the adaptation of the trailer to the length each time required entails long times and, inevitably, prolonged stops.

Even though tolerated, the long adaptation times do not lead, however, to configurations or settings that are always optimal and hence satisfactory. The foregoing results principally from the fact that the adjustments allowed by known steering units are in any case of a "discrete" type and hence always lead to non-ideal configurations that are in any case compromise solutions. In other words, given that it is practically impossible to perform a setting dedicated to each of the wide range of lengths of the trailer, some configurations are previously identified, each of which is common to a respective group of lengths of the trailer, with the result that the setting chosen is different from the theoretical one. It follows that, in some steering conditions, the wheels of one or more axles tend to rub on the asphalt, wearing out in a different way from the wheels of the other axles, thus jeopardizing the reliability and stability of the trailer and generating on the kinematic transmission chain even high stresses that frequently render the vehicle difficult to manoeuvre.

The aim of the present invention is to provide a variable-length trailer, the characteristics of implementation of which will enable a simple and economically advantageous solution to the problems set forth above and, in particular, will enable an optimal adjustment or setting of the trailer whatever the length of the trailer set.

According to the present invention a variable-length trailer is provided, comprising a front attachment portion, a fifth wheel carried by said front portion for coupling the front portion to a tractor in a rotatable manner about a steering axis, a supporting frame connected to which is at least one tyred steering axle, guide-and-slide axial-adjustment means, which are set between the attachment portion and said supporting frame for varying the length of the trailer, and a hydraulic steering circuit for steering said tyred steering axle, the trailer being **characterized in that** said hydraulic steering circuit comprises at least one variable-displacement hydraulic member and control means for varying the displacement of said variable-displacement hydraulic member as a function of the rotation of said fifth wheel about said steering axis and of the length of the trailer.

Preferably, in the trailer defined above, the hydraulic circuit comprises hydraulic actuator means for adjusting the angular position of said tyred steering axle, and hydraulic delivery means for sending a flowrate of operating fluid towards said hydraulic actuator means; at least one between said hydraulic actuator means and said hydraulic delivery means comprising said variable-displacement hydraulic member.

The invention will now be described with reference to the attached figures, which illustrate a non-limiting example of embodiment thereof and in which:
Figure 1 is a schematic illustration in plan view of a first preferred embodiment of the variable-length trailer according to the present invention coupled to a tractor;
Figure 2 is a view similar to that of Figure 1 and illustrates a variant of a detail of Figure 1;
Figure 3 is a view similar to that of Figure 1 and illustrates a second preferred embodiment of the variable-length trailer according to the present invention coupled to a tyred tractor; and
Figure 4 illustrates a variant of a detail of Figure 3.

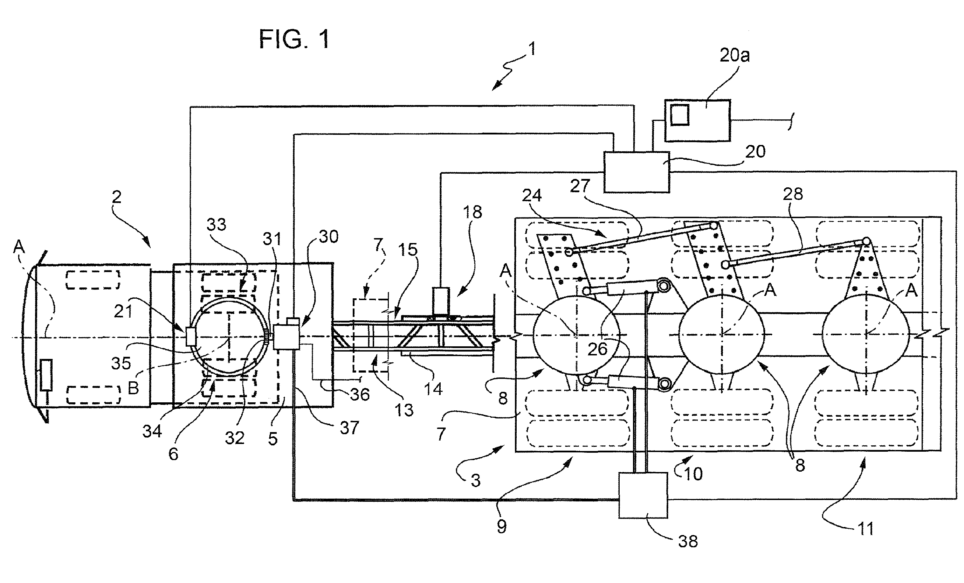

In Figure 1, designated as a whole by 1 is a transport vehicle comprising a tyred tractor 2 and a variable-length trailer 3.

The trailer 3 has a longitudinal axis 4 and comprises a front attachment portion 5, in itself known, a fifth wheel 6 carried by the front portion 5 for connecting the attachment portion 5 to the tractor in a rotatable manner about a substantially vertical steering axis B, and a rear supporting frame 7. Connected to the frame 7, in the particular case described, are, via respective fifth wheels 8, three tyred steering axles, designated by 9, 10 and 11, each of which is able to turn about a respective hinge axis A.

The front portion 5 and the rear frame 7 are connected to one another via a guide-and-slide axial-adjustment device 13 designed to enable relative displacement between the front portion 5 and the rear frame 7 for varying the length of the trailer 3.

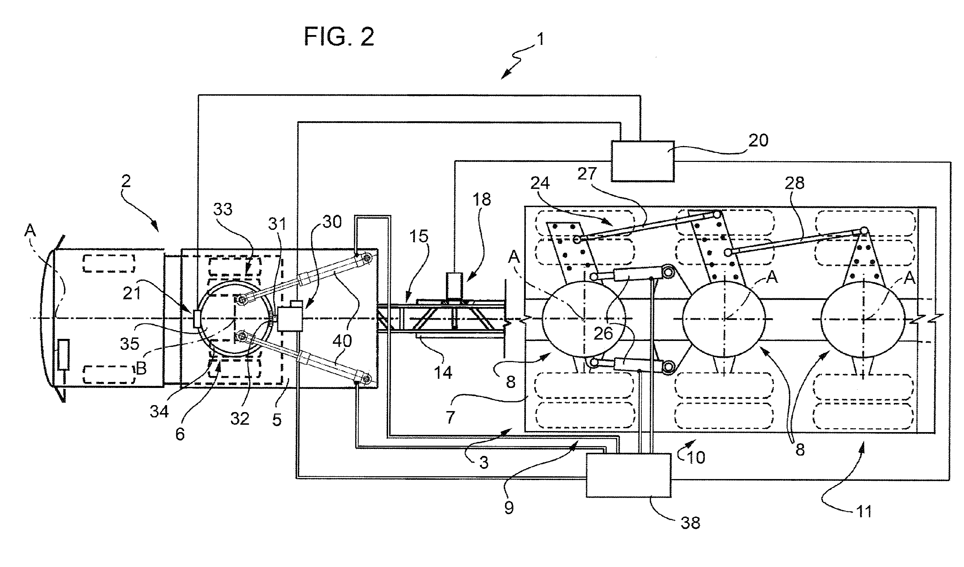

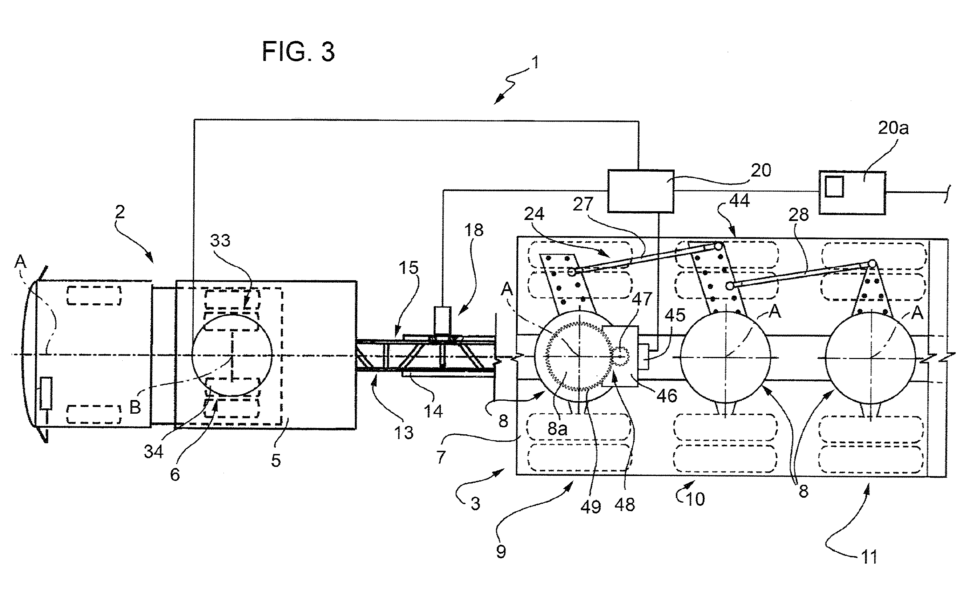

With reference to Figures 2 and 3, the adjustment device 13 comprises a guide 14 parallel to the axis 4 carried by the frame 7 and an elongated structure or central beam 15 fixedly connected to the portion 5 in a position parallel to the axis 4 and coupled to the guide 14 in a slidable way for translating between a retracted position, illustrated with a dashed line in Figure 1, and corresponding to a minimum length of the trailer 3, and an extracted position corresponding to a maximum length of the trailer 3 itself and illustrated with a solid line once again in Figure 1.

The device 13 further comprises a detector block 18, conveniently of an optical type or of a feeler type, which is set in the proximity of the guide 14 for issuing to a control unit 20 a signal corresponding to the relative position between the guide 14 and the beam 15 and, hence, proportional to the instantaneous length of the trailer 3. Provided as an alternative or in parallel to the detector block 18 is a keyboard or other equivalent element for manual data input 20a connected to the unit 20 for sending to the unit 20 itself a signal indicating the aforesaid instantaneous length of the trailer 3. Reaching the control unit 20 is also a signal sent by an angular-position sensor 21 associated to the fifth wheel 6 for detecting continuously the steering angle, i.e., the relative angular position between the trailer 3 and the tractor 2 about the axis B.

Once again with reference to Figure 1, the axles 9, 10 and 11 can turn about the respective axes A under the thrust of a steering unit 24 controlled by the unit 20 and comprising a pair of hydraulic actuator jacks 26, which are set between the frame 7 and the axle 9, and a pair of struts/tierods 27 and 28, which are set between the axles 9 and 10 and, respectively, between the axles 10 and 11.

Once again with reference to Figure 1, the steering unit 24 further comprises a variable-displacement pump 30, a casing of which is fixedly connected to the attachment portion 5 of the trailer 3 and has an input shaft 31, the axis of which intersects the axis 4. The input shaft 31 carries fitted thereto a gear wheel 32, which forms part of a mechanical transmission 33 and meshes with a crown wheel 34, which shares the axis of the fifth wheel 6 and is stably connected to a mobile portion 35 of the fifth wheel 6 connected, in use, to the tractor 2 in an angularly fixed position.

The pump 30 has an inlet 36 hydraulically connected to a fluid tank, and an outlet 37 hydraulically connected to the hydraulic jacks 26 via a distributor unit 38 controlled by the unit 20.

In use, during steering, the sensor 21 detects the steering angle and communicates it to the unit 20, to which there is also sent, via the detector block 18 or the keyboard 20a, a signal corresponding to the instantaneous length of the trailer 3. On the basis of said data, the unit 20 controls the variable-displacement pump 30, which sends a pre-set flowrate to the jacks 26 through the distributor 38. The jacks 26, together with the struts/tierods 27 turn the axles 9, 10 and 11 in one direction or in the other about the respective axes A by an amount such that the instantaneous centres of curvature of the axles 9, 10, 11 coincide with, or are arranged in positions adjacent to one another and to, the centre of curvature of the tractor 2.

In the variant illustrated in Figure 2, the steering unit 24 moreover comprises two further hydraulic delivery jacks 40, in themselves known, which are arranged on opposite sides of the longitudinal axis 4 and have respective sleeves hinged to the attachment portion 5, and respective stems hinged to diametrally opposite sides of the mobile portion 35 of the fifth wheel 6. The jacks 40 are hydraulically connected to the hydraulic jacks 26 through the distributor unit 38.

According to said variant, the instantaneous flowrate sent or delivered by the jacks 40 to the jacks 26 during rotation of the mobile portion 35 of the fifth wheel 6 is integrated with an additional flowrate sent by the variable-displacement pump 30 as a function once again of the steering angle and of the length of the trailer 3 set. In this way, the angular position of the fifth wheels 8 is adjusted in a precise way and so that the instantaneous centres of curvature of the axles 9, 10 and 11 coincide with, or are arranged in positions adjacent to one another and to, the centre of curvature of the tractor 2.

The embodiment illustrated in Figure 3 regards a variable-length trailer 43, which differs from the trailer 3 on account of some details of implementation and the constitutive parts of which are distinguished, where possible, by the same numbers as the corresponding parts of the vehicle 1.

The trailer 43 comprises a steering unit 44, which differs from the unit 24 in that it comprises, instead of the jacks 26 a variable-displacement motor 45, once again controlled by the unit 20. In the particular example described, the motor 45 is associated to the axle 9, i.e., to the same fifth wheel 8 to which the jacks 26 were associated, is set with its axis parallel to the axis A of rotation of the corresponding fifth wheel 8, and has an external structure 46 connected to the frame 7 and a output drive shaft, fitted on which is a gear wheel 47. The gear wheel 47 forms part of a gear transmission 48, which moreover comprises a further gear wheel 49 sharing the corresponding axis A and stably connected to the mobile portion 8a of the corresponding fifth wheel 8.

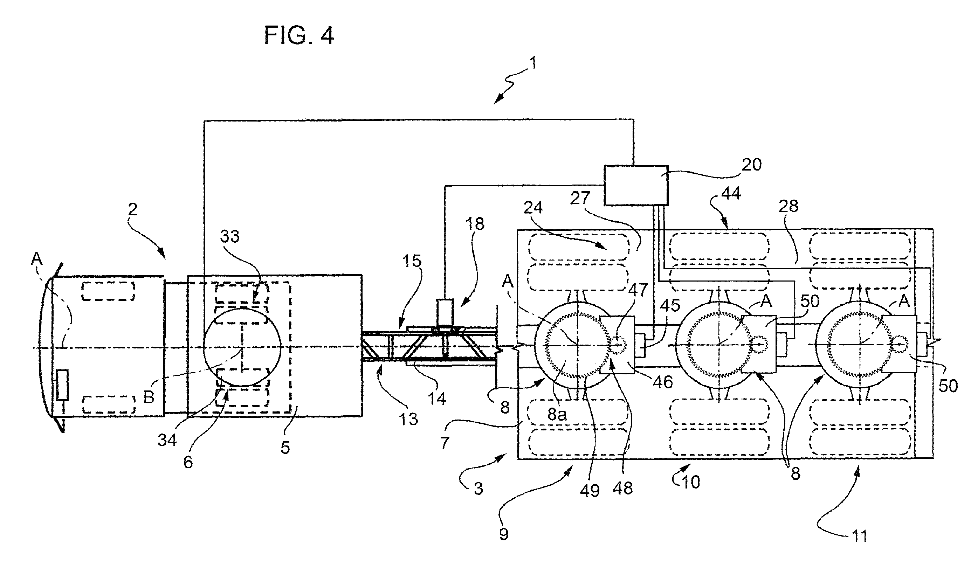

In the variant illustrated in Figure 4, the tierods/struts 27, 28 are replaced by respective variable-displacement hydraulic motors 50 associated one to the axle 10 and the other to the axle 12. The motors 50 are the same as the motor 45, are connected to the corresponding axle in the same way as the motor 45 itself, and are controlled by the unit 20.

In use, the presence of the variable-displacement motor 45 enables precise adjustment of the steering angle of the axle 9, whilst the use of one hydraulic motor for each axle enables a precise adjustment of the steering angle of each of the axles.

From the foregoing it emerges clearly that, as compared to the known solutions, the trailers 1 and 43 described can be adjusted in length and automatically configured according to an optimal steering configuration for the length envisaged. The foregoing basically results from the particular mode of implementation of the steering units 24 and 44 and, in particular from the fact that said steering units are each provided with a corresponding variable-displacement hydraulic member, which enables precise adjustment of the rotation of the steering axles 9, 10 and 11 about their hinge axes A as a function of any steering angle whatsoever of the tractor 2 taking into account the effective length of the trailer 3. In this way, the centres of curvature of the different steering axles can be brought into positions set alongside one another or coinciding with one another and with the centre of curvature of the tractor 2, thus preventing, during steering, any rubbing between some of the wheels and the road surface and the consequent onset of anomalous vibrations and stresses on the structure of the trailer as well as on its own mechanical or hydraulic transmissions. The absence of rubbing moreover reduces fuel consumption.

From the foregoing it emerges clearly that modifications and variations may be made to the trailers 3 and 43 described, without thereby departing from the sphere of protection defined by the claims. In particular, the structure of the trailer could differ from the one described, as well as the number of steering axles, and the arrangement of the pump and of the variable-displacement motor or motors. In addition, it is evident that for safety reasons, both the pump and the variable-displacement motors could be different in number from what has been indicated by way of example so as to provide a hydraulic steering unit with a redundancy of components.

## Claims

1. A variable-length trailer (3) comprising a front attachment portion (5), a fifth wheel carried by said front portion for connecting the front portion to a tractor in a rotatable manner about a steering axis, a supporting frame (7) connected to which is at least one tyred steering axle, guide-and-slide axial-adjustment means (13) which are set between the attachment portion and said supporting frame for varying the length of the trailer (3), and a hydraulic steering circuit for steering said tyred steering axle, said trailer being **characterized in that** said hydraulic steering circuit comprises at least one variable-displacement hydraulic member and control means for varying the displacement of said variable-displacement hydraulic member as a function of the rotation of said fifth wheel about said steering axis and of the length of the trailer.

2. The trailer according to Claim 1, **characterized in that** said hydraulic circuit comprises hydraulic actuator means for adjusting the angular position of said tyred steering axle and hydraulic delivery means for sending a flowrate of operating fluid towards said hydraulic actuator means; at least one between said hydraulic actuator means and said hydraulic delivery means comprising said variable-displacement hydraulic member.

3. The trailer according to Claim 2, **characterized in that** said variable-displacement hydraulic member forms part of said hydraulic delivery means and comprises a variable-displacement pump.

4. The trailer according to Claim 3, **characterized in that** said supplier means further comprise a mechanical transmission set between an input drive shaft of said variable-displacement pump and the fifth wheel carried by said attachment portion.

5. The trailer according to Claim 4, **characterized in that** said mechanical transmission is a gear transmission and comprises a first gear wheel fitted on said input drive shaft and a second gear wheel fixedly connected to said fifth wheel.

6. The trailer according to any one of Claims 3 to 5, **characterized in that** said hydraulic delivery means further comprise a pair of hydraulic jacks hydraulically connected to said actuator means and coupled to said fifth wheel for sending a flow of fluid proportional to the angle of rotation of said fifth wheel; said variable-displacement pump being hydraulically connected in parallel to said hydraulic jacks for supplying an additional flow of operating fluid to said hydraulic actuator means.

7. The trailer according to Claim 1 or Claim 2, **characterized in that** said hydraulic actuator means comprise at least one variable-displacement hydraulic motor.

8. The trailer according to Claim 7, **characterized in that** said actuator means further comprise a gear transmission set between said variable-displacement hydraulic motor and a fifth wheel for coupling said steering axle to said rear supporting portion.

9. The trailer according to Claim 7 or Claim 8, **characterized in that** it comprises at least one further steering axle and **in that** said actuator means comprise for each said axle a corresponding said variable-displacement hydraulic motor.

10. The trailer according to any one of the preceding claims, **characterized in that** said control means comprise first angular-detection means for detecting an angle of rotation of said fifth wheel, and second detection means for detecting the length of said trailer.
